# EUROPÄISCHE PATENTANMELDUNG

(11) **EP 0 860 489 A2**
(43) Veröffentlichungstag der Anmeldung: **26.08.1998**
(21) Anmeldenummer: 98102165.2
(22) Anmeldetag: 07.02.1998
(51) Int. Cl.: C09J 7/04, C09J 133/06

(54) **Repulpierbares Klebeband**

(30) Priorität: 22.02.1997 DE 19707181
(71) Anmelder: Beiersdorf Aktiengesellschaft, 20245 Hamburg (DE)
(72) Erfinder: Gleichenhagen, Peter, Dr., 22417 Hamburg (DE); Müller, Annemarie, 22459 Hamburg (DE); Westphal, Andreas, 22049 Hamburg (DE)

(57) **Zusammenfassung**

Repulpierbares Klebeband für reversibles Verkleben, mit einem Papierträger und zumindest einseitig darauf angeordneter Haftklebemasse in Form vereinzelter Kleber-Kalotten aus wasserbasierten Pasten mit hoher Viskosität und hohem elastischem Anteil, die in vollflächiger Beschichtung nicht reversibel von Papiersubstraten zu lösen sind.

## Beschreibung

Die Erfindung betrifft ein repulpierbares Klebeband und seine Verwendung.

Haftklebefilme, die aus Kautschuk/Harz-Mischungen oder verschiedensten Polymeren, wie z.B. Polyacrylaten oder Ethylen/Vinylacetat-Copolymeren, hergestellt werden, sind üblicherweise nicht repulpierbar. Papierklebebänder oder -Etiketten, die mit derartigen Haftklebern ausgerüstet sind, verursachen Störungen beim Recycling des Papiers, die auf der Bildung sogenannter Stickies beruhen. Diese entstehen u.a. aus potentiell klebfähigen Partikeln, die sich beim Zerfasern des Papiers in der wäßrigen Pulpe durch Zerschlagen der Haftklebefilme bilden.

Da die Reinigung des Faserbreis von derartigen Teilchen auf Grund der Abmessungen der Fasern nur mit Sieben von mindestens ca. 100 µm Schlitzbreite bzw. Lochdurchmesser durchführbar ist, passiert ein großer Teil dieser wesentlich kleineren Partikel diese Reinigungsstufe. Auch größere Haftkleberteilchen können die Siebsektion durchdringen, da diese Partikel wegen der niedrigen Glasübergangstemperatur von Haftklebern (ca. -20°C bis -60°C) durch Schergefälle bei den üblichen Temperaturen der Pulpe (RT bis ca. 70°C) leicht verformbar sind und dadurch ihren Durchmesser verringern können. Andere Abscheidungs-Verfahren, wie z.B. Zentrifugieren oder Flotieren erbringen ebenfalls nur unvollständige Wirkungsgrade.

Die Stickies bilden Fehlstellen im regenerierten Papier und / oder setzen sich, angereichert mit Faserbruchstücken und/oder Füllstoffen, Bindermaterial und Harzen, als störende klebrige Schicht auf den Trockenzylindern und auf dem Sieb der Papiermaschine ab. Aus diesem Grunde stellen Haftklebefilme, die aus redispergierbaren Filmen, wie sie aus speziellen Haftklebedispersionen z.B. gemäß US-Patent 5 196 504 und US-Patent 5 550 181( Scholz) erstellt werden können, nur eine Teillösung des Problems dar, da die redispergierten Haftklebe-Teilchen als potentielle Störstoffe in größeren Anteilen im Papierfaserbrei verteilt verbleiben und nur durch ihre geringen Abmessungen makroskopisch verhältnismäßig unauffällig sind.

Um diese Problematik zu umgehen, ist eine Reihe repulpierbarer Haftkleber entwickelt worden. Als anerkannte Testmethoden für die Repulpierbarkeit werden diese Haftklebeartikel z.B. nach den Vorschriften "Tappi Useful Method 204" (Tappi UM 204) und/oder "Non Beating Test" geprüft. Die wasserlöslichen Typen der repulpierbaren Haftkleber haben sich bisher in der Praxis am besten bewährt. Diese Haftkleber werden bei der Papierherstellung mit dem Prozeßwasser entfernt.

Sie bestehen im wesentlichen aus einem wasserlöslichen Gerüstpolymer, zumeist aus durch Polymerisation in polarer organischer Lösung gewonnenen polaren Polyacrylaten, die mit wasserlöslichen Weichmachern haftklebrig eingestellt sind, wie dies in den folgenden Patentschriften aufgezeigt wird:

US 3 441 430 Peterson, US 3 865 770 Blake, US 4 052 368 Larson, US 4 413 080 Blake, US 4 569 960 Blake, EP 0 532 013 Nakamura, EP 0 352 442 Zbigniew, EP 0 379 932 Zbigniew und DE 43 40 297 Gleichenhagen.

### Hintergrund der Erfindung.

Die entsprechend den aufgezeigten Patenten hergestellten einseitig oder doppelseitig haftklebrig ausgerüsteten repulpierbaren Tapes und andere haftklebrige Flächengebilde werden bei fliegenden Rollenwechseln und anderen z.B. manuellen Spleißungen in der Papier- und Druckindustrie eingesetzt. Hierbei sollen die Verklebungen rasch möglichst hohe Festigkeitswerte erreichen.

Ein reversibles Verbinden, bei dem die Verklebung mit den Tapes bzw. Etiketten bei definiert eingestellten Klebkräften auch nach langer Verklebungsdauer ein rasches, rückstandsfreies Ablösen ohne Zerstörung der beklebten Papieroberfläche erlaubt, ist mit den beschriebenen Verfahren nicht möglich. Derartige Anwendungen wären z.B. Verschließ-Mechanismen bei repulpierbaren Verpackungen auf Papierbasis, die ein mehrfaches Öffnen und Schließen gestatten, wie es z.B. bei den bisher nicht repulpierbar haftklebrig ausgerüsteten Briefumschlägen bekannt ist. Gleiches gilt für rückstandsfrei ablösbare Papieretiketten oder Haftnotizzettel. In der Papier- und Druckindustrie können derartige repulpierbare, reversible Verklebungen zum vorübergehenden Befestigen des Bahnendes eines Papierballens auf der darunterliegenden Windung dienen. Auch Kombinationen von repulpierbaren, permanent und reversibel klebenden Zonen auf einem Tape oder Etikett sind von Interesse. So kann z.B. ein repulpierbares Splice-Tape zusätzlich mit einer reversibel klebenden Zone ausgerüstet werden, die das Bahnende eines für den "Flying Splice" vorbereiteten Papierballens auf der darunterliegenden Windung mit definierter Klebkraft fixiert. Für die Vorbereitung des Splice-Vorgangs kann dann der Ballen auf Maschinen-Bahngeschwindigkeit drehbeschleunigt werden, ohne daß das Bahnende sich vom Ballen löst. Beim Splice-Vorgang wird dann durch den Bahnzug die reversible Verklebung zur folgenden Windung gelöst, ohne daß das Papier an dieser Stelle geschädigt wird oder die Papier-Bahn wegen zu hoher Klebkraft der Fixierung des Bahnendes reißt. Dies und ähnliche Problemstellungen zu lösen, war Aufgabe der vorliegenden Erfindung.

### Beschreibung der Erfindung:

Gelöst wird diese Aufgabe durch Klebebänder, wie sie in den Ansprüchen näher gekennzeichnet sind.

Für die Bereitstellung der reversibel haftenden, repulpierbaren Haftkleberbeschichtungen werden gemäß der Erfindung wasserlösliche Haftklebemassen aufgezeigt, die in Fortentwicklung der Siebdruck bzw. Tiefdruckverfahren wie sie in den EP 149.135 B1 bereits beschrieben sind, im Sieb- oder Tiefdruck in Form diskreter, meist kreisförmiger Klebflächen von ca. 20-1500 µm Durchmesser auf die Papierträger aufgebracht werden können. Hierzu werden wasserbasierte Pasten mit hoher Viskosität und hohem elastischen Anteil in ihrem Fließverhalten erzeugt, die nach dem Trocknen wasserlösliche Haftklebefilme ergeben. In vollflächiger Beschichtung sind diese repulpierbaren Haftkleber nicht reversibel von Papiersubstraten zu lösen. Die reversible Ablösbarkeit wird erst in Kombination mit der vereinzelten Anordnung bzw. dem Beschichtungsverfahren erreicht. Als Beschichtungsverfahren wird der Rotations-Siebdruck bevorzugt. Bei entsprechend abgesenktem Viskositätsprofil kann alternativ auch das Tiefdruckverfahren eingesetzt werden, ggf. auch Sprühen oder das sog. Ink-Jet.

Für die Herstellung der druckfähigen Pasten werden insbesondere Polyacrylatdispersionen mittels bekannter Verfahren der radikalischen Polymerisation erzeugt, die aus Copolymeren wasserunlöslicher oder auch Anteilen wasserlöslicher (Meth)acrylester mit zusätzlich einem hohen Gehalt (ca. 20-60 Gew.% in der Monomermischung) von stark polaren Monomeren vorzugsweise solchen, die Carboxylgruppen tragen wie z.B.(Meth)acrylsäure, bestehen und als getrockneter Film lackartige nicht haftklebrige oder nur leicht blockende Oberflächen bilden. Die Stabilisierung der dispersen Phase erfolgt vorteilhaft in üblicher Weise mit anionischen Emulgatoren und bei Bedarf unter Zusatz nichtionischer Emulgatoren. Bevorzugt werden einpolymerisierbare Emulgatoren, da sie dem resultierenden Polymer zusätzliche Hydrophilie verleihen. Falls der Polymerisationsgrad für eine rasche Repulpierbarkeit zu hoch ausfällt, kann dieser durch Verwendung bekannter regelnder Substanzen, z. B. Dodecylamin in Mengen von ca. 0,5 Gew.% bez. auf Monomere, erniedrigt werden. Durch Zumischen wasserlöslicher Weichmacher, vorzugsweise bei Raumtemperatur flüssigen Polyethylen - oder -propylenglykolen oder schwach basischen ethoxylierten Alkylaminen, in der Größenordnung Polymer/ Weichmacher von 1/1 bis ca. 1/3 (Gewichtsverhältnis) werden Compounds erhalten, die nach dem Trocknen haftklebrige Massen ergeben. Falls die durch die basischen Weichmacher und deren Salzbildung mit den Carboxylgruppen des Polymers erhöhte Hydrophilie für eine einwandfreie Repulpierbarkeit bzw. Wasserlöslichkeit nicht ausreicht, kann eine zusätzliche Hydrophilierung durch weitere partielle Neutralisation der Carboxylgruppen mit Alkalihydroxiden oder Ammoniak bis zur völligen Lösung des Polymers vorgenommen werden. Diese Maßnahme steigert außerdem die Immobilisierung der Wasserphase und erhöht damit in erwünschter Weise den elastischen Anteil im Fließverhalten der hochviskosen Druckpasten. Dadurch wird unter den hohen Scherkräften beim Passieren der Sieböffnungen oder Ausfließen aus den Gravur-Näpfen ein Fädenziehen durch viskoses Nachfließen der Druckpaste, das zu undefiniertem Auftrag mit unsauberem Druckbild führt, unterbunden. Zur Verringerung störender Schaumbildung ist es von Vorteil, die Druckpaste nach Maßgabe des Verbrauchs dosiert in die Auftragswerke anzutragen. Hilfreich kann auch ein Zusatz von Entschäumern oder zugleich weichmachenden flüssigen Polyethylenglykolen oder Polypropylenglykolen sein.

Die Feststoffgehalte der Druckpasten können im Bereich von ca. 25 Gew.% bis 65 Gew.%, vorzugsweise zwischen 30 Gew.% bis 60 Gew.% liegen. Zur Erhöhung des elastischen Anteils können der Paste geringe Mengen Füllstoff zugefügt werden.

Die Kohäsivität der resultierenden Haftklebefilme kann bei Bedarf durch Vernetzung ,vorzugsweise mittels mehrwertiger Kationen, die z.B. als Zink-Ammoniakat zugemischt werden, erhöht werden. Auch Di-amine, insbesondere ethoxilierte Derivate, die gleichzeitig als Weichmacher wirken, oder Di-epoxide sind geeignet.

Strahlen-Vernetzung mit entsprechenden Zusätzen von mehrfach ungesättigten polymerisationsfähigen Verbindungen (β-Strahlung) und bei Einsatz von UV-Strahlung mit Zusatz von Photoinitiatoren, ist ebenfalls möglich. Damit die Repulpierbarkeit nicht unzulässig verringert wird, sollen derartige nachträgliche Vernetzerzusätze - mit Ausnahme der ethoxilierten nur schwach vernetzend wirkenden Diamine - in engen Grenzen gehalten werden.

Zur Erhöhung der Klebkraft können den Dispersionen polare Klebharze in Form wäßriger Dispersionen oder Lösungen vorzugsweise in Mengen von 10-20 Gew.% zugemischt werden. Mit Änderungen im Verhältnis Polymer/Weichmacher sowie im geringeren Maße durch Auswahl und Anteile der verschiedenen Monomere bei der Herstellung des Polymers lassen sich die klebtechnischen Eigenschaften der Haftklebefilme in weiten Grenzen einstellen, so daß stark tackige aber auch sehr kohäsive Haftklebefilme erhalten werden können.. Als Weichmacher werden bevorzugt wasserlösliche, ethoxylierte Alkylamine eingesetzt.

Die Beschichtung erfolgt vorzugsweise in Rotations-Siebdruckanlagen mit Sieben von 14 mesh bis ca. 200 mesh und Lochdurchmessern von 1000µm bis ca. 50µm wobei die üblichen Wandstärken (Lochtiefen) im Bereich 400µm bis 100µm liegen. Damit können je nach Sieb-Design und Feststoff-Anteil der Druckpaste insbesondere Haftklebermengen von ca. 2g/qm bis 80g/qm in Form diskreter haftklebender Flächen aufgetragen werden.

Klebflächen, deren Abstände voneinander größenordnungsmäßig im Bereich der Faserlängen der anhaftenden Papierfläche liegen und deren Ausdehnung ebenfalls in der Größenordnung dieser Faserlänge begrenzt ist, gewähren in der Regel, bei ausreichend verfestigtem Faserverbund, auch bei stark beschleunigter Ablösegeschwindigkeit der Papierfläche eine Abtrennung ohne Faserausriß. Die Substratoberfläche wird dabei nicht geschädigt und bei genügender Kohäsion des Haftklebers auch nicht verschmutzt. Die Haftklebefläche bleibt frei von Faserbelegung und steht für eine erneute Verklebung zur Verfügung, so daß die Kriterien einer reversiblen Verklebung erfüllt werden. Durch entsprechendes Sieb-Design können in einem weiten Bereich die gewünschten klebtechnischen Eigenschaften über Abstände, Ausdehnung und in Grenzen auch Volumen der Haftkleber-Areale auf den haftklebrigen Flächengebilden eingestellt und den Erfordernissen verschiedener Papiersorten angepaßt werden. Dadurch können bereits mit einer Haftkleberrezeptierung der oben beschriebenen Art Klebkräfte mit verschiedener Stärke, von schwach klebenden Bereichen mit Übergängen bis in den irreversiblen Bereich auf einem Flächengebilde erzeugt werden, etwa gemäß EP 328.925 B1. Zusätzlich können bei mit Rapportsteuerung ausgerüsteten Anlagen haftklebende Areale aus unterschiedlichen Beschichtungsmaterialien auf ein Flächengebilde gedruckt werden.

Nachfolgend wird die Erfindung anhand von Beispielen erläutert, ohne sie dadurch aber unnötig einschränken zu wollen.

### Beispiel 1

In eine für die Emulsionspolymerisation ausgerüstete 2L-Apparatur mit Ankerrührer werden 430g entionisiertes Wasser, 4g anionischer, polymerisationsfähiger Emulgator (Hitenol A-10 Firma Dai-ichi Kogyo Seiyaku Co Ltd), 6 g ethoxiliertes Nonylphenol mit 20 Ethoxi-Einheiten, 15g Methacrylsäure, 10g 2-Hydroxiethylmethacrylat und 25g n-Butyl-acrylat gefüllt. Nach Verdrängen des Sauerstoffs und Aufheizen auf 75° C wird die Polymerisation mit 0,05g Ammonium-peroxidisulfat initiiert. In die entstandene Keimphase werden nach Maßgabe des Verbrauchs 105g Methacrylsäure, 70g 2-Hydroxiethyl-methacrylat, 175g n-Butyl-acrylat sowie 12g Hitenol-A10, 18g ethoxiliertes Nonynlphenol und 0,35g Ammoniumperoxidisuffat, gelöst in 120g entionisiertem Wasser, eindosiert. Die Reaktion ist nach 4 h bei einer Temperatur zwischen 75-82°C beendet. Es resultiert eine Polymerdispersion mit 41,5% Feststoffgehalt.

In einem Labor-Kneter werden 200g der erhaltenen Dispersion (83g Polymer) mit 120g eines ethoxilierten Dodecylamins mit 15 Ethoxi-Einheiten unter Zusatz von 1,6g KOH in Form einer 10%igen wäßrigen. Lösung zu einer hochviskosen Paste verknetet und mit entionisiertem Wasser auf eine Konzentration von 45% gesamten Feststoff eingestellt. Die erhaltene Druckpaste wird durch ein 17 mesh Sieb mit 11% Durchlaß auf Streichrohpapier beschichtet und getrocknet. Es wird eine haftklebende Beschichtung erhalten, die aus diskreten nahezu kreisförmigen Klebflächen besteht, die einen Durchmesser von ca. 1 mm und einen Abstand von ca. 0,8 mm voneinander aufweisen. Die Haftkleber-Menge beträgt 16g/qm.
20 mm breite und 250 mm lange Streifen werden auf verschiedenen Schreibpapieren und einem Etikettenpapier geklebt und durch 10 maliges Überrollen mit einer 4 kg schweren Walze auf die Prüfflächen angedrückt. Nach einer Verklebungszeit von 48 h wird eine Klebkraft im 180° Peeltest bei einer Abzugsgeschwindigkeit von 300 mm/min im Bereich 0,5-0,7 N/cm gemessen. Sowohl beim Peeltest als auch bei raschem Abziehen der Klebestreifen unter verschiedenen Winkeln von Hand ist kein Faserausriß nachzuweisen. Die Klebkraft steigt auch nach langer Verklebungszeit nicht wesentlich an.

Die Prüfblätter, die nach Tappi UM 204 und dem "Non Beatig Test" hergestellt werden, enthalten keinerlei sichtbare Stippen oder Stickies.

### Beispiel 2

Die in Beispiel 1 beschriebene Emulsionspolymerisation wird mit folgenden Änderungen in der Zusammensetzung der Monomeren wiederholt:

Für die Keimphase werden 20g Methacrylsäure, 10g Polyethylenglglycol-mono-Methacrylat mit durchschnittlich 6 Ethoxi-Einheiten und 20g n-Butyl-acrylat eingesetzt. In diese nach dem Starten der Polymerisation erhaltene Keimphase werden neben den im Beispiel 1 beschriebenen Zusatzstoffen ein Monomerengemisch aus 140g Methacrylsäure, 70g Polyethylenglycol-mono-Methacrylat wie oben beschrieben und 160g n-Butyl-acrylat nach Maßgabe des Verrauchs eindosiert. Es resultiert eine Polymerdispersion mit 41 Gew.% Feststoffgehalt.

Wie im Beispiel 1 beschrieben werden 200g der erhaltenen Dispersion (82g Polymer) mit 120g eines ethoxilierten Propylen-diamins, das neben insgesamt durchschnittlich 15 Ethoxi-Einheiten einen Stearylrest an den N-Atomen als Substituenten enthält (Ethoduomeen T 25 der Firma Akzo-Chemie), unter Zusatz von 1g KOH in Form einer 10%igen wäßrigen. Lösung und 120g entionisiertem Wasser, die 1g pyrogene Kieselsäure (Aerosil 200 Firma Degussa) enthalten, zu einer siebdruckfähigen Paste mit 31 Gew% Feststoff verknetet.

Die, entsprechend dem Beispiel 1 auf Streichrohpapier verdruckte Haftklebermenge beträgt ca. 10g/qm.

Die entsprechend Beispiel 1 durchgeführte Messung der Klebkraft auf Etikettenpapier ergibt 0,4N/cm ohne Faserausriß oder Rückstände auf dem Substrat.

Die nach Tappi UM 204 und dem "Non Beating Test" hergestellten Prüfblätter enthalten keine Stippen oder Stickies.

### Beispiel 3

Entsprechend den oben beschriebenen Beispielen wird die Emulsions-Polymerisation ohne Änderung bei den Hilfsstoffen mit 25g Methacrylsäure, 10g Polyethylenglycol-mono-methacrylat (s.o.) und 15g n-Butyl-acrylat in der Keimphase und 175g Methacrylsäure, 70g Polyethylenglycol-mono-methacrylat (s.o.) sowie 105g n-Butylacrylat in der zudosierten Mischung wiederholt. Es wird eine Polymerdispersion mit 41 Gew.% Feststoff erhalten.

200 g der erhaltenen Dispersion werden wie im Beispiel 1 bzw. 2 beschrieben mit 120g Ethoduomeen T 25 (s.o.) zu einer Paste gemischt, wie dort verdruckt und die Klebkraft sowie die Repulpierbarkeit geprüft. Die Klebkraft liegt bei einer Beschichtung von 12g/qm bei O,5 N/cm. Beim Abziehen des Tapes von Etiketten-Papier werden keine Fasern ausgerissen. Die beiden oben genannten Pulp-Tests werden bestanden.

In den Zeichnungen sind beispielhafte Ausführungsformen der Erfindung dargestellt. Es zeigen
- Fig. 1: eine schematische Draufsicht auf die Kleberseite eines erfindungsgemäßen Klebebandes,
- Fig. 2: eine schematische Draufsicht auf eine Variante der in Fig. 1 gezeigten Version,
- Fig. 3-5: jeweils eine schematische Seitenansicht eines erfindungsgemäßen Klebebandes, verklebt auf einem Papierballen, vorbereitet zum Splice-Vorgang.

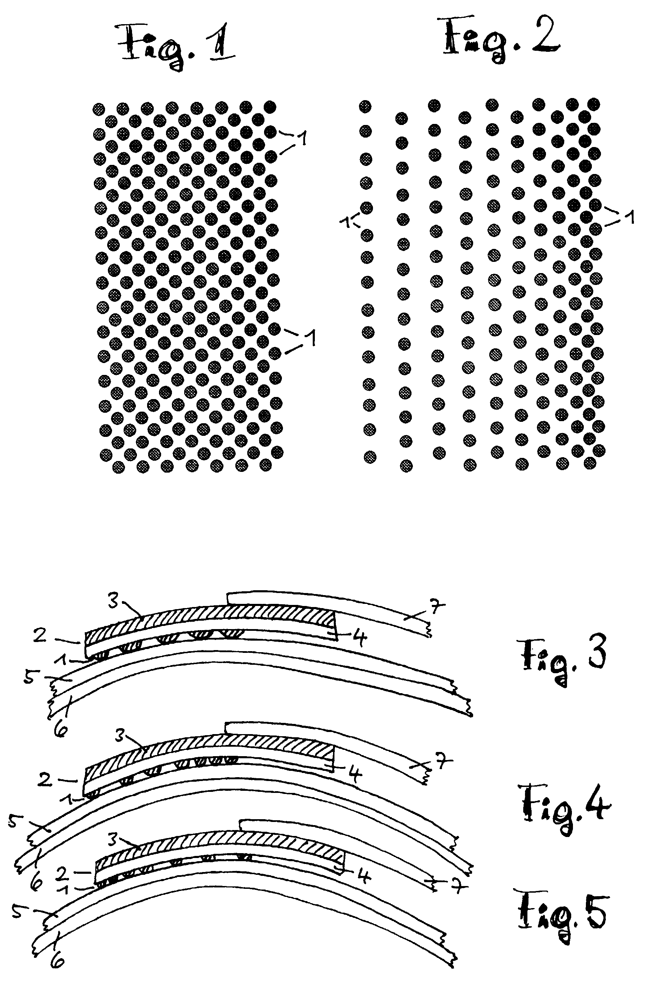

Im einzelnen zeigen Figur 1 Kleber-Kalotten 1, die in symmetrischer Form angeordnet sind, während die Kleber-Kalotten 1 gemäß Figur 2 im rechten Bereich der Figur 2 gehäuft angeordnet sind, im linken Bereich mehr vereinzelt, so daß die Klebkraft vom linken zum rechten Bereich hin ansteigt.

Die Figuren 3 - 5 zeigen erfindungsgemäße, repulpierbare Splice-Tapes bzw. Klebebänder 2 mit vollflächiger Klebmasse 3, Träger 4 und Kleber-Kalotten 1. Mit den Kleber-Kalotten 1 klebt das Klebeband 2 auf der unteren Papierbahn 5 eines Papierballens 6, während das Klebeband 2 mit der vollflächigen Klebmasse 3 mit der oberen Papierbahn 7 auf der darunter liegenden Papierbahn 5 mit definierter Klebkraft fixiert, so daß zur Vorbereitung des Splice-Vorgangs der Papierballen 6 auf Maschinen-Bahngeschwindigkeit drehbeschleunigt werden, ohne daß das Bahnende bzw. die obere Papierbahn 7 sich vom Ballen löst. Beim anschließenden Flying-Splice wird dann die bisher laufende Papierbahn (nicht dargestellt) gegen den offen liegenden Bereich der Klebmasse 3 geführt und an diesen geklebt, so daß die reversible Verklebung der Kleber-Kalotten 1 zur darunter liegenden Papierbahn 5 gelöst wird, ohne daß das Papier an dieser Stelle geschädigt wird oder die Papierbahn wegen zur starker Fixierung des Bahnendes reißt.

Vorteilhaft dabei sind Ausgestaltungen der Anordnung der Kleber-Kalotten 1 in an- bzw. absteigender Zahl (oder auch Größe). So ist gemäß Figur 3 die Anordnung der Kleber-Kalotten 1 symmetrisch und gleich verteilt, während gemäß Figur 4 die Kleber-Kalotten 1 zur rechten Seite hin dichter stehen, gemäß Figur 5 zur linken Seite hin dichter stehen. Je nach Papiertyp, Maschinentyp, Rotationsgeschwindigkeit etc. kann dabei die eine oder andere Variante bevorzugt sein.

## Patentansprüche

1. Repulpierbares Klebeband für reversibles Verkleben, mit einem Papierträger und zumindest einseitig darauf angeordneter Haftklebemasse in Form vereinzelter Kleber-Kalotten aus wasserbasierten Pasten mit hoher Viskosität und hohem elastischem Anteil, die in vollflächiger Beschichtung nicht reversibel von Papiersubstraten zu lösen sind.

2. Klebeband nach Anspruch 1, dadurch gekennzeichnet, daß die Haftklebemasse aus Polyacrylatdispersionen mittels radikalischer Polymerisation hergestellt ist, insbesondere aus Copolymeren (Meth)acrylestern mit einem Gehalt von 20 - 60 Gew.-% in der Monomermischung von stark polaren Monomeren, insbesondere solchen mit Carboxylgruppen, wie (Meth)acrylsäure.

3. Klebeband nach Anspruch 2, dadurch gekennzeichnet, daß die Polyacrylatdispersionen mit anoinischen Emulgatoren, ggf. unter Zusatz von nichtionischen Emulgatoren stabilisiert sind.

4. Klebeband nach Anspruch 1, dadurch gekennzeichnet, daß die Haftklebemasse wasserlösliche Weichmacher, insbesondere flüssige Polyethylen- oder Polypropylenglykole oder schwach basische ethoxyilierte Alkylamine, insbesondere in Mengen von 1 Gewichtsteil Polymer zu 1 Gewichtsteil Weichmacher bis 1 Gewichtsteil Polymer zu 3 Gewichtsteilen Weichmacher.

5. Klebeband nach Anspruch 4, dadurch gekennzeichnet, daß eine zusätzliche Hydrophilierung durch weitere partielle Neutralisation mit Alkalihydroxid oder Ammoniak bis zur völligen Lösung des Polymeren erfolgt.

6. Klebeband nach Anspruch 1, dadurch gekennzeichnet, daß die Haftklebemasse Entschäumer enthält.

7. Klebeband nach Anspruch 1, dadurch gekennzeichnet, daß die Paste 25 - 65, insbesondere 30 - 60 Gew.-% Feststoffgehalt aufweist.

8. Klebeband nach Anspruch 1, dadurch gekennzeichnet, daß die Kohäsivität der Kleber-Kalotten durch Vernetzung erhöht wird.

9. Klebeband nach Anspruch 1, dadurch gekennzeichnet, daß die Haftklebemasse polare Klebharze enthält, insbesondere als wäßrige Dispersionen oder Lösungen, und insbesondere in Mengen von 10 - 20 Gew.-% bezogen auf die Gesamtmenge der wasserbasierten Paste.

10. Klebeband nach Anspruch 1, dadurch gekennzeichnet, daß die Kleber-Kalotten im Siebdruck, insbesondere im Rotations-Siebdruck, oder im Tiefdruck aufgebracht sind.

11. Klebeband nach Anspruch 1, dadurch gekennzeichnet, daß die Kleber-Kalotten entsprechend einer Haftklebermenge von 2 - 80 g/m² aufgebracht sind.

12. Klebeband nach Anspruch 1, dadurch gekennzeichnet, daß die Kleber-Kalotten gleichmäßig oder in der Zahl und/oder Größe nach ansteigender Form aufgebracht sind.

13. Klebeband nach Anspruch 1, dadurch gekennzeichnet, daß die Kleber-Kalotten auf der einen Seite des Papierträgers angeordnet sind, während die gegenüberliegende Seite des Papierträgers vollflächig mit repulpierbarer Haftklebemasse beschichtet ist, nach Art eines Fixes.

14. Verwendung eines Klebebandes nach einem der Ansprüche 1 - 13 zum Flying-Splice.
